(19) **Europäisches Patentamt European Patent Office Office européen des brevets**

(11) **EP 3 977 152 B1**

(12) **FASCICULE DE BREVET EUROPEEN**

(45) Date de publication et mention de la délivrance du brevet:
**06.08.2025 Bulletin 2025/32**

(21) Numéro de dépôt: **20726487.0**

(22) Date de dépôt: **25.05.2020**

(51) Classification Internationale des Brevets (IPC):
**G01S 5/02** *(2010.01)*    **G01S 5/00** *(2006.01)*
**G01S 19/42** *(2010.01)*

(52) Classification Coopérative des Brevets (CPC):
**G01S 5/02; G01S 5/0009; G01S 5/0289;
G01S 5/02955;** G01S 19/42

(86) Numéro de dépôt international:
**PCT/EP2020/064408**

(87) Numéro de publication internationale:
**WO 2020/239674 (03.12.2020 Gazette 2020/49)**

(54) **PROCÉDÉ ET SYSTÈME DE GÉOLOCALISATION D'UN OBJET À L'AIDE D'UNE STATION DE BASE MOBILE**

VERFAHREN UND SYSTEM ZUM GEOLOKALISIEREN EINES OBJEKTES MITTELS EINER MOBILEN BASISSTATION

METHOD AND SYSTEM FOR GEOLOCATING AN OBJECT USING A MOBILE BASE STATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2019 FR 1905636**

(43) Date de publication de la demande:
**06.04.2022 Bulletin 2022/14**

(73) Titulaire: **UNABIZ**
**31670 Labège (FR)**

(72) Inventeurs:
- **LARIGNON, Guillaume**
**31670 Labège (FR)**
- **MARTY, Renaud**
**31520 Ramonville Saint Agne (FR)**
- **GISSOT, Perrine**
**31380 Villaries (FR)**
- **ISSON, Olivier**
**31650 Lauzerville (FR)**

(74) Mandataire: **Ipside**
**6, Impasse Michel Labrousse**
**31100 Toulouse (FR)**

(56) Documents cités:
**EP-A1- 2 979 108      US-A1- 2005 075 111**

- **MAUVE M ET AL: "A survey on position-based routing in mobile ad hoc networks", IEEE NETWORK, IEEE SERVICE CENTER, NEW YORK, NY, US, vol. 15, no. 6, 1 November 2001 (2001-11-01), pages 30 - 39, XP011474047, ISSN: 0890-8044, DOI: 10.1109/65.967595**

**Description**

**Domaine de l'invention**

La présente invention appartient au domaine de la géolocalisation d'un objet, par exemple pour retrouver un objet perdu ou volé. Plus particulièrement, l'invention concerne un procédé et un système de géolocalisation d'un terminal d'un système de communication sans fil.

**Etat de la technique**

La possibilité de géolocaliser un objet perdu ou volé représente un enjeu majeur pour de nombreuses industries. L'importance de cet enjeu peut être liée au coût de l'objet lui-même, mais elle peut aussi être liée à l'impact dudit objet en termes de sécurité (par exemple si l'objet contient des produits chimiques dangereux) ou en termes de processus (par exemple si l'objet est un élément nécessaire pour accomplir une étape d'un processus). Par conséquent, même un petit objet de faible coût peut présenter une valeur élevée. La question est de savoir comment géolocaliser ces objets pour les retrouver lorsqu'ils sont égarés.

Il existe de nombreuses méthodes pour géolocaliser un terminal d'un système de communication sans fil à partir de signaux radio échangés entre le terminal et des stations de base du système de communication sans fil.

Dans les réseaux cellulaires de type GSM, UMTS ou LTE, il est connu d'estimer la position d'un terminal comme étant celle de la station de base à laquelle il est actuellement associé, étant entendu qu'un terminal est en général associé à la station de base dont il est le plus proche. Cette méthode présente cependant une précision de géolocalisation médiocre puisque la zone de couverture d'une station de base peut atteindre plusieurs kilomètres, voire plusieurs dizaines de kilomètres de rayon.

D'autres méthodes consistent à estimer les distances qui séparent un terminal de plusieurs stations de base en calculant les temps d'arrivée ou les différences de temps d'arrivée de signaux radio échangés entre ces entités afin de déterminer la position du terminal par trilatération (TOA pour « Time Of Arrival », ou TDOA pour « Time Difference Of Arrival » dans la littérature anglo-saxonne). Des méthodes analogues se basent sur les angles d'arrivée des signaux radio (on parle alors de triangulation), ou bien sur des calculs de différence de fréquence d'arrivée des signaux (FDOA pour « Frequency Difference Of Arrival »). Cette dernière étant basée sur l'effet Doppler, elle nécessite cependant que le terminal dont on cherche la position soit en mouvement par rapport aux points d'observation. Ces différentes méthodes présentent toutes l'inconvénient de nécessiter une synchronisation précise des différentes stations de base jouant le rôle de points d'observation. En outre, ces méthodes sont particulièrement sensibles au phénomène dit de multi-trajet (« multipath » en anglais) qui correspond à la propagation d'un même signal radio par plusieurs chemins à cause des phénomènes de réflexion, réfraction et diffraction sur les obstacles rencontrés, ce qui entraîne une limitation de la précision de géolocalisation.

D'autres méthodes de géolocalisation se basent sur le niveau de puissance reçue (RSSI pour « Received Signal Strength Indicator ») d'un signal radio échangé entre un terminal et une station de base. Ces méthodes reposent sur le fait qu'un signal radio est atténué dans l'atmosphère et donc que le niveau de RSSI d'un signal reçu par un récepteur varie en fonction de la distance qui sépare le récepteur de l'émetteur du signal. Ainsi, il est possible de déterminer la position géographique d'un terminal par trilatération en estimant la distance séparant le terminal des différentes stations de base qui l'entourent à partir des niveaux de RSSI mesurés par les stations de base. La précision de géolocalisation d'une telle méthode dépend de la densité des stations de base sur la zone géographique concernée : plus la densité des stations de base à proximité du terminal recherché est grande et meilleure sera la précision de géolocalisation du terminal.

D'autres méthodes de géolocalisation reposent sur des techniques d'apprentissage automatique (« Machine Learning » dans la littérature anglo-saxonne) qui associent une empreinte (« fingerprint ») à une position géographique. Concrètement, il s'agit de construire dans un premier temps une base de données qui associe des « signatures radio » à des positions géographiques connues. Pour chaque position géographique connue, une signature radio correspond à un ensemble de niveaux de RSSI mesurés pour un terminal situé à ladite position géographique connue pour un ensemble de stations de base du système. Ensuite, pendant une phase de recherche, une signature radio observée pour un terminal situé à une position inconnue est comparée à l'ensemble des signatures de la base de données afin d'estimer la position du terminal à partir de la (ou des) position(s) correspondant à la (aux) signature(s) la (les) plus proche(s). Il convient de noter que la précision de géolocalisation d'une telle méthode est largement dépendante de la quantité d'éléments de référence dans la base de données et de la densité des stations de base sur la zone géographique concernée.

Pour des systèmes de communication sans fil couvrant des zones géographiques vastes (par exemple à l'échelle d'une ville, d'une région, d'un pays ou d'un continent), la densité de stations de base dudit système de communication est généralement inférieure à 0,5 station de base par kilomètre carré. Les méthodes de géolocalisation connues pour de tels systèmes de communication ne permettent pas d'obtenir des précisions satisfaisantes (les précisions obtenues sont souvent de l'ordre du kilomètre, voire de plusieurs kilomètres).

US2005075111A divulgue un système de positionnement pour déterminer la position d'un disspositif mobile comprenant des stations de base fixes et des stations mobiles supplémentaires.

**Exposé de l'invention**

La présente invention a pour objectif de remédier à tout ou partie des inconvénients de l'art antérieur, notamment ceux exposés ci-avant, en proposant une solution pour géolocaliser un objet équipé d'un terminal d'un système de communication sans fil. Cette solution permet de géolocaliser un objet avec une précision satisfaisante même dans une zone géographique étendue (par exemple une précision inférieure à cinq cent mètres pour une zone géographique de l'ordre de cinq kilomètres de côté).

A cet effet, et selon un premier aspect, il est proposé par la présente invention, un procédé de géolocalisation d'un terminal d'un système de communication sans fil. Le système de communication sans fil comporte des stations de base fixes, et un serveur de géolocalisation connecté auxdites stations de base fixes. La position géographique de chaque station de base fixe est connue par le serveur de géolocalisation. Le procédé de géolocalisation comporte les étapes suivantes :

- une mesure, pour au moins une station de base fixe, d'un paramètre représentatif d'un signal radio échangé entre le terminal et ladite station de base fixe,
- une estimation d'une position géographique grossière du terminal à partir de la ou des mesures ainsi obtenues et à partir de la position géographique de chaque station de base fixe pour laquelle une mesure a été obtenue,
- une détermination d'une zone de recherche à partir de la position géographique grossière estimée,
- un déplacement d'une station de base mobile dans ladite zone de recherche pendant une période de recherche prédéterminée, ladite station de base mobile étant connectée au serveur de géolocalisation,
- une émission, par le terminal, d'au moins un signal radio pendant la période de recherche, chaque signal radio étant émis à destination des stations de base fixes du système de communication sans fil et de la station de base mobile,
- une mesure, pour chaque signal radio émis par le terminal pendant la période de recherche, d'un paramètre représentatif dudit signal radio pour au moins une station de base fixe et pour la station de base mobile,
- une détermination, pour chaque signal radio émis par le terminal pendant la période de recherche, d'une position géographique de la station de base mobile à l'instant où est émis ledit signal radio,
- une estimation d'une position géographique précise du terminal à partir d'une part des mesures obtenues pendant la période de recherche, et d'autre part de la position géographique de chaque station de base fixe pour laquelle une mesure a été obtenue pendant la période de recherche et de la position géographique de la station de base mobile à l'instant d'émission de chaque signal radio émis par le terminal pendant la période de recherche.

De telles dispositions permettent notamment d'accroître artificiellement la densité de stations de base dans la zone de recherche pendant la période de recherche. Plus la densité de stations de base à proximité du terminal recherché est importante, et plus la précision de l'estimation de la position du terminal est bonne.

Il convient de noter que si une des stations de base fixes ou la station de base mobile ne reçoit pas un signal radio émis par le terminal, une valeur de mesure par défaut du paramètre représentatif du signal radio peut être attribuée. Cette valeur par défaut correspond alors à une absence de signal.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, le procédé comporte en outre une configuration à distance du terminal pour que le terminal émette des signaux radio avec un schéma de récurrence prédéterminé pendant la période de recherche.

Dans des modes particuliers de mise en œuvre, une position géographique intermédiaire du terminal est estimée pour chaque signal radio émis par le terminal pendant la période de recherche, et la position géographique précise du terminal est estimée à partir desdites positions géographiques intermédiaires.

Dans des modes particuliers de mise en œuvre, la position géographique précise du terminal est estimée sous la forme d'une moyenne pondérée des positions géographiques intermédiaires, chaque position géographique intermédiaire étant pondérée en fonction des paramètres mesurés pour les stations de base fixes et la station de base mobile pour différents signaux radio émis pendant la période de recherche.

Dans des modes particuliers de mise en œuvre, une signature virtuelle est déterminée, ladite signature virtuelle comportant :

- une valeur de paramètre, pour chaque station de base fixe pour laquelle au moins une mesure a été obtenue pendant la période de recherche, calculée à partir de la ou des mesures obtenues pour ladite station de base fixe pour différents signaux radio émis par le terminal pendant la période de recherche, et

**EP 3 977 152 B1**

- une valeur de paramètre pour chaque mesure réalisée pour la station de base mobile pendant la période de recherche.

La position géographique précise du terminal est alors estimée à partir d'une part de ladite signature virtuelle, et d'autre part de la position géographique de chaque station de base fixe utilisée pour déterminer la signature virtuelle et des positions géographiques de la station de base mobile aux différents instants d'émission des signaux radio.

Dans des modes particuliers de mise en œuvre, une position géographique intermédiaire du terminal est estimée pour chaque signal radio émis par le terminal pendant la période de recherche. La station de base mobile est déplacée à ladite position géographique intermédiaire avant que le terminal n'émette un nouveau signal radio. Différentes positions géographiques intermédiaires peuvent ainsi être successivement déterminées pendant la période de recherche, et la station de base mobile est successivement déplacée à chaque position intermédiaire ainsi déterminée. La position géographique précise est alors estimée comme étant la dernière position géographique prise par la station de base mobile pendant la période de recherche.

Dans des modes particuliers de mise en œuvre, le paramètre représentatif d'un signal radio échangé entre le terminal et une station de base est un décalage fréquentiel observé pendant la réception dudit signal radio par la station de base.

Selon un deuxième aspect, la présente invention concerne un système de géolocalisation d'un terminal d'un système de communication sans fil. Le système de géolocalisation comporte des stations de base fixes dudit système de communication sans fil dont les positions géographiques sont connues, et un serveur de géolocalisation connecté auxdites stations de base fixes. Le serveur de géolocalisation est configuré pour:

- collecter, pour au moins une station de base fixe, une mesure d'un paramètre représentatif d'un signal radio échangé entre le terminal et ladite station de base fixe,

- estimer une position géographique grossière du terminal à partir de la ou des mesures collectées et à partir de la position géographique de chaque station de base fixe pour laquelle une mesure a été collectée.

Le système de géolocalisation comporte en outre une station de base mobile connectée au serveur de géolocalisation.

Le serveur de géolocalisation est configuré pour :

- déterminer, à partir de la position géographique grossière estimée, une zone de recherche dans laquelle la station de base mobile est déplacée pendant une période de recherche prédéterminée,
- collecter, pour chaque signal radio émis par le terminal à destination des stations de base fixes et de la station de base mobile pendant la période de recherche, une mesure d'un paramètre représentatif dudit signal radio pour au moins une station de base fixe et pour la station de base mobile,
- déterminer, pour chaque signal radio émis par le terminal pendant la période de recherche, une position géographique de la station de base mobile à l'instant où est émis ledit signal radio,
- estimer une position géographique précise du terminal à partir d'une part des mesures collectées pendant la période de recherche, et d'autre part de la position géographique de chaque station de base fixe pour laquelle une mesure a été collectée et de la position géographique de la station de base mobile à l'instant d'émission de chaque signal radio émis par le terminal pendant la période de recherche.

**Présentation des figures**

L'invention sera mieux comprise à la lecture de la description suivante, donnée à titre d'exemple nullement limitatif, et faite en se référant aux figures 1 à 4 qui représentent :

[Fig. 1] : une représentation schématique d'un système de géolocalisation selon l'invention,
[Fig. 2] : une représentation schématique des principales étapes d'un mode particulier de mise en œuvre du procédé de géolocalisation selon l'invention,
[Fig. 3] : une représentation schématique d'un mode particulier de déplacement de la station de base mobile dans la zone de recherche,
[Fig. 4] : une représentation schématique d'un autre mode particulier de déplacement de la station de base mobile dans la zone de recherche,
[Fig. 5] : une représentation schématique d'un mode particulier de mise en œuvre du procédé de géolocalisation selon l'invention.

Dans ces figures, des références identiques d'une figure à une autre désignent des éléments identiques ou analogues. Pour des raisons de clarté, les éléments représentés ne sont pas nécessairement à une même échelle, sauf mention contraire.

## Description détaillée d'un mode de réalisation de l'invention

Dans la suite de la description, on se place dans le cas où l'on recherche un objet égaré équipé d'un terminal d'un système de communication sans fil.

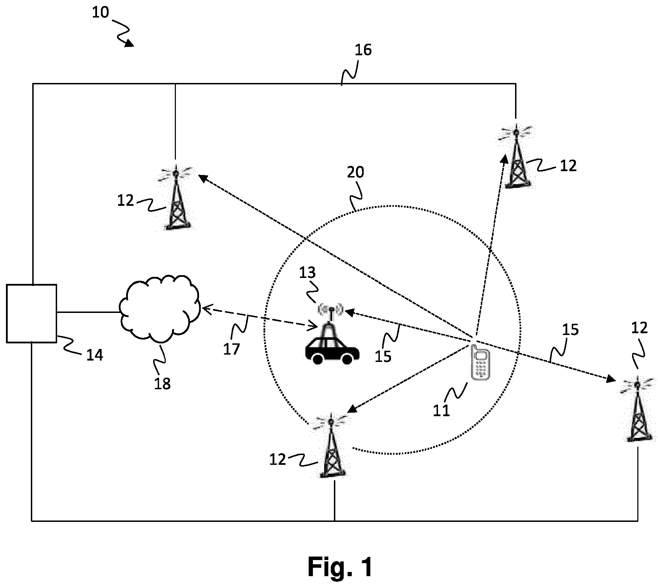

La figure 1 représente schématiquement un exemple d'un système 10 de géolocalisation selon l'invention. Le système 10 de géolocalisation comporte au moins un terminal 11 et plusieurs stations de base fixes 12 d'un système de communication sans fil.

Les stations de base fixes 12 ont chacune une position géographique prédéterminée qui est connue du serveur 14 de géolocalisation et qui ne change pas au cours du temps. En outre, les stations de base fixes 12 sont connectées à un serveur 14 de géolocalisation, c'est-à-dire qu'il existe un lien de communication 16 entre chaque station de base fixe 12 et le serveur 14 de géolocalisation afin d'échanger des informations entre les stations de base fixes 12 et le serveur 14 de géolocalisation. Ce lien de communication 16 peut être un lien filaire ou bien un lien de communication sans fil.

Dans un tel système, les communications entre un terminal 11 et une station de base fixe 12 peuvent généralement être bidirectionnelles, c'est-à-dire que des données peuvent être transmises depuis une station de base fixe 12 vers le terminal 11 sur un lien radio descendant, ou bien du terminal 11 vers une station de base fixe 12 sur un lien radio montant.

Dans la suite de la description, on se place à titre d'exemple et de manière non limitative dans le cas d'un système de communication sans fil du type LPWAN à bande ultra étroite. Un tel système de communication sans fil (acronyme anglais de « *Low Power Wide Area Network* ») est un réseau d'accès longue portée à faible consommation énergétique dont les débits sont généralement inférieurs à 100 kbits/s. Par « bande ultra étroite » (« Ultra Narrow Band » ou UNB dans la littérature anglo-saxonne), on entend que le spectre fréquentiel instantané des signaux radio émis par les terminaux est de largeur fréquentielle inférieure à deux kilohertz, voire inférieure à un kilohertz. Par « signal radio », on entend une onde électromagnétique se propageant via des moyens non filaires, dont les fréquences sont comprises dans le spectre traditionnel des ondes radioélectriques (quelques hertz à plusieurs centaines de gigahertz). De tels systèmes de communication sans fil UNB sont particulièrement adaptés pour des applications du type M2M (acronyme anglo-saxon pour « Machine to Machine ») ou du type IoT (« Internet of Things »).

Dans un tel système de communication sans fil, la consommation énergétique d'un terminal 11 pour émettre des signaux radio est réduite au maximum de telle sorte que la durée de vie d'une batterie du terminal 11 peut durer plusieurs années sans être rechargée. En outre, la portée des signaux radio peut atteindre plusieurs kilomètres, voire plusieurs dizaines de kilomètres.

Dans un tel système de communication sans fil, les échanges de données sont essentiellement monodirectionnels, en l'occurrence sur un lien radio montant 15 d'un terminal 11 vers les stations de base fixes 12 dudit système de communication sans fil. Afin de minimiser les risques de perdre un message émis par un terminal, la planification du réseau d'accès est souvent réalisée de telle sorte qu'une zone géographique donnée est couverte simultanément par plusieurs stations de base fixes 12, de telle manière qu'un message émis par un terminal 11 peut être reçu par plusieurs stations de base fixes 12.

Chaque station de base fixe 12 est adaptée à recevoir des messages des terminaux 11 qui se trouvent à sa portée. Chaque message ainsi reçu est par exemple transmis au serveur 14 de géolocalisation, éventuellement accompagné d'autres informations comme un identifiant de la station de base fixe 12 qui a reçu le message, une valeur représentative de la qualité du signal radio transportant le message, la fréquence centrale sur laquelle le message a été reçu, etc. Le serveur 14 traite par exemple l'ensemble des messages reçus des différentes stations de base fixes 12. Le serveur 14 peut alors être utilisé pour mettre en œuvre un procédé de géolocalisation d'un terminal du système.

Notamment, le serveur 14 peut estimer, à l'aide de méthodes conventionnelles de géolocalisation, une position géographique grossière du terminal 11 à partir d'une part de mesures d'un paramètre représentatif d'un signal radio échangé entre le terminal 11 et les stations de base fixes 12 et d'autre part à partir des positions géographiques desdites stations de base fixes 12. Cette position géographique grossière permet de déterminer une zone de recherche 20 dans laquelle le terminal 11 présente une forte probabilité de s'y trouver.

Le système 10 de géolocalisation comporte en outre une station de base mobile 13 qui possède des fonctionnalités similaires à celles d'une station de base fixe 12 pour recevoir un message provenant du terminal 11 et pour communiquer avec le serveur de géolocalisation 14. En outre, la position géographique de la station de base mobile 13 peut varier au cours du temps. La station de base mobile 13 est par exemple embarquée dans un véhicule automobile ou dans un drone. La station de base mobile 13 est elle aussi connectée au serveur 14 de géolocalisation, par exemple par l'intermédiaire d'un réseau d'accès 18 d'un autre système de communication sans fil tel qu'un réseau cellulaire de type GSM, UMTS, LTE, ou bien tel qu'un réseau Wi-Fi. Un lien de communication sans fil 17 peut être établi entre la station de base mobile 13 et le réseau d'accès 18. Le serveur 14 de géolocalisation est relié audit réseau d'accès 18, par exemple via un réseau central de type Internet (non représenté sur la figure 1). De telles dispositions permettent d'échanger des informations entre le serveur 14 de géolocalisation et la station de base mobile 13.

La station de base mobile 13 est destinée à être déplacée dans la zone de recherche 20 pendant une période de recherche prédéterminée. La station de base mobile 13 et les stations de base fixes 12 sont par exemple configurées pour mesurer, pour chacun d'un ou plusieurs signaux radio émis par le terminal 11 pendant la période de recherche, un paramètre représentatif dudit signal radio. Selon un autre exemple, ces mesures d'un paramètre représentatif d'un signal radio sont effectuées par le terminal 11 puis transmises au serveur 14, ou bien elles sont effectuées par le serveur 14 à partir d'informations fournies par les stations de base.

Dans ce but, le terminal 11, les stations de base fixes 12, la station de base mobile 13 et/ou le serveur 14 comportent un dispositif de mesure comportant par exemple des moyens qui sont configurés de façon logicielle (produit programme d'ordinateur exécuté sur un ou plusieurs processeurs) et/ou de façon matérielle (circuit logique programmable, circuit intégré spécialisé, composants électroniques discrets, etc.) pour faire du traitement de signal.

Le terminal 11, les stations de base fixes 12, la station de base mobile 13 et le serveur 14 comportent en outre, de façon conventionnelle, un module de communication pour pouvoir échanger des messages sur les différents liens de communication 15, 16 et 17.

La station de base mobile 13 est également configurée pour déterminer, pour chaque signal radio émis par le terminal 11 pendant la période de recherche, une position géographique de la station de base mobile 13 à l'instant où est émis ledit signal radio, et pour envoyer cette position géographique au serveur 14 de géolocalisation. A cette fin, la station de base mobile 13 peut comporter un dispositif de positionnement, par exemple un récepteur d'un système de navigation par satellites (GNSS pour « Global Navigation Satellite System » dans la littérature anglo-saxonne), permettant de fournir la position géographique courante de la station de base mobile 13.

L'information relative à la mesure du paramètre représentatif du signal radio pour une station de base fixe 12 est envoyée par ladite station de base fixe 12 au serveur 14 de géolocalisation sur le lien de communication 16.

Les informations relatives à la mesure du paramètre représentatif du signal radio pour la station de base mobile 13 et à la position géographique de la station de base mobile 13 à l'instant où est émis ledit signal radio sont envoyées par la station de base mobile 13 au serveur 14 de géolocalisation via le lien de communication sans fil 17.

Le serveur 14 de géolocalisation peut alors estimer une position géographique précise du terminal 11 à partir d'une part des mesures réalisées pendant la période de recherche pour les stations de base fixes 12 et la station de base mobile 13, et d'autre part des positions géographiques des stations de base fixes 12 et des positions géographiques de la station de base mobile 13 aux différents instants d'émission des signaux radio.

Dans ce but, le serveur 14 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre tout ou partie des étapes d'un procédé de géolocalisation d'un terminal. Alternativement ou en complément, le serveur 14 comporte un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes.

En d'autres termes, le serveur 14 comporte des moyens qui sont configurés de façon logicielle (produit programme d'ordinateur spécifique) et/ou matérielle (FPGA, PLD, ASIC, composants électroniques discrets, etc.) pour mettre en œuvre les étapes d'un procédé d'estimation d'un instant d'arrivée d'un message.

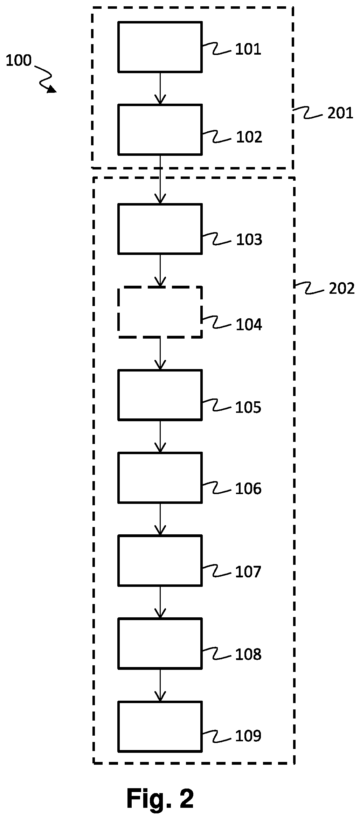

La figure 2 représente schématiquement les principales étapes d'un mode particulier de mise en œuvre du procédé 100 de géolocalisation selon l'invention.

Le procédé 100 de géolocalisation comporte une étape de mesure 101, pour au moins une station de base fixe 12, d'un paramètre représentatif d'un signal radio échangé entre le terminal 11 et ladite station de base fixe 12.

Il convient de noter que ce paramètre peut être mesuré par la station de base fixe 12 (dans le cas d'un signal radio émis par le terminal 11 à destination des stations de base fixes 12), ou bien par le terminal 11 (dans le cas où ce sont les stations de base fixes 12 qui émettent des signaux radio à destination du terminal 11). Il est également envisageable que le paramètre soit mesuré par le serveur 14 de géolocalisation à partir d'informations envoyées par les stations de base fixes 12. Dans la suite de la description, on se place à titre d'exemple nullement limitatif dans le cas où le paramètre est mesuré par les stations de base fixes 12 pour un signal radio émis par le terminal 11 à destination des stations de base fixes 12.

Selon un premier exemple, ce paramètre est un niveau de puissance reçue pour le signal radio (RSSI). Selon d'autres exemples, le paramètre est un temps d'arrivée ou une différence de temps d'arrivée du signal radio au niveau des stations de base fixes 12 (méthode TOA ou TDOA). Selon encore un autre exemple le paramètre est une différence de fréquence d'arrivée du signal radio au niveau des stations de base fixes 12 (méthode FDOA).

Le procédé 100 de géolocalisation comporte également une étape d'estimation 102 d'une position géographique grossière du terminal 11 à partir des mesures réalisées à l'étape 101 et à partir des positions géographiques des stations de base fixes 12 pour lesquelles une mesure a été obtenue.

Les étapes 101 et 102 correspondent ainsi à une première phase 201 où une méthode conventionnelle de géolocalisation d'un terminal 11 d'un système de communication sans fil est appliquée. Cette méthode conventionnelle peut être basée, comme indiqué précédemment, sur des méthodes de trilatération utilisant des estimations de la distance séparant le terminal des différentes stations de base, ou bien sur des méthodes d'apprentissage automatique utilisant des signatures radio du terminal. Le choix d'une méthode particulière n'est qu'une variante de l'invention.

Le procédé 100 de géolocalisation comporte ensuite une étape de détermination 103 d'une zone de recherche 20 à partir de la position géographique grossière estimée à l'étape 102. Tel qu'illustré sur la figure 1, la zone de recherche 20 est par exemple délimitée par un cercle centré sur la position géographique grossière estimée et dont le rayon est tel que la probabilité que le terminal 11 se situe à l'intérieur du cercle est supérieure à une valeur prédéterminée. La probabilité que le terminal 11 se situe à l'intérieur du cercle correspond à une erreur de géolocalisation calculée, de manière connue pour l'homme du métier, par la méthode appliquée pour la phase 201.

Le procédé 100 de géolocalisation comporte ensuite une étape de déplacement 105 de la station de base mobile 13 dans la zone de recherche 20 pendant une période de recherche prédéterminée.

Le procédé 100 de géolocalisation comporte également une étape d'émission 106, par le terminal 11, d'un ou plusieurs signaux radio pendant la période de recherche. Chaque signal radio est émis à destination des stations de base fixes 12 et de la station de base mobile 13. Dans la suite de la description, on considère à titre d'exemple nullement limitatif que le terminal 11 émet plusieurs signaux radio pendant la période de recherche.

La station de base mobile 13 peut par exemple être déplacée dans la zone de recherche 20 pendant la période de recherche selon un plan de déplacement prédéterminé. Selon un autre exemple, la station de base mobile 13 peut être déplacée dans la zone de recherche 20 en fonction de positions géographiques intermédiaires estimées pour chaque signal radio émis par le terminal 11 pendant la période de recherche.

Le procédé 100 de géolocalisation comporte une étape de mesure 107, pour chaque signal radio émis par le terminal 11 pendant la période de recherche, d'un paramètre représentatif dudit signal radio pour au moins une station de base fixe 12 et pour la station de base mobile 13. Ce paramètre peut être le même que celui utilisé pendant la première phase 201 par la méthode conventionnelle de géolocalisation pour fournir une estimation grossière de la position géographique du terminal 11. Rien n'empêche cependant qu'un paramètre différent soit utilisé. Il peut notamment s'agir d'un niveau RSSI, ou d'une valeur TOA, TDOA ou FDOA. Dans la suite de la description, on considère à titre d'exemple nullement limitatif qu'au moins une mesure est obtenue pour plusieurs stations de base fixes 12 différentes pendant la période de recherche.

Il convient de noter que l'invention n'est pas limitée à l'utilisation d'un seul paramètre représentatif d'un signal radio échangé entre le terminal 11 et une station de base 12, 13. Il est en effet possible de mesurer plusieurs paramètres différents et d'estimer la position géographique du terminal 11 à partir de ces différents paramètres.

Dans des modes particuliers de mise en œuvre, le paramètre représentatif d'un signal radio échangé entre le terminal 11 et une station de base fixe 12 ou la station de base mobile 13 est un décalage fréquentiel observé pendant la réception dudit signal radio par la station de base fixe 12 ou par la station de base mobile 13. Ce mode particulier de mise en œuvre est notamment avantageux parce que la station de base mobile 13 se déplace et donc qu'il y a un mouvement relatif entre la station de base mobile 13 et les stations de base fixes 12 et entre la station de base mobile 13 et le terminal 11. Ceci est en effet une condition nécessaire pour des méthodes de type FDOA pour obtenir de bonnes performances de géolocalisation en termes de précision. Avantageusement, les vecteurs de vitesse de la station de base mobile 13 aux instants de réception des signaux radio émis par le terminal 11 peuvent être fournis au serveur 14 de géolocalisation pour améliorer la précision de la géolocalisation.

Le procédé 100 de géolocalisation comporte également une étape de détermination 108, pour chaque signal radio émis par le terminal 11 pendant la période de recherche, d'une position géographique de la station de base mobile 13 à l'instant où est émis ledit signal radio. Cette position géographique est par exemple déterminée à l'aide d'un dispositif de positionnement, par exemple un récepteur GPS, associé à la station de base mobile 13. On peut considérer que la différence entre l'instant où un signal radio est émis par le terminal 11 pendant la période de recherche et l'instant où ledit signal radio est reçu par la station de base mobile 13 est négligeable. Autrement dit, l'instant où est le signal radio est émis par le terminal 11 est sensiblement le même que l'instant où le signal radio est reçu par la station de base mobile 13.

Enfin, le procédé 100 de géolocalisation comporte une étape d'estimation 109 d'une position géographique précise du terminal 11 à partir d'une part des mesures réalisées pendant la période de recherche pour les stations de base fixes 12 et la station de base mobile 13, et d'autre part des positions géographiques des stations de base fixes 12 et des positions géographiques de la station de base mobile 13 aux différents instants d'émission des signaux radio.

Les étapes 103 à 109 correspondent ainsi à une deuxième phase 202 pendant laquelle la station de base mobile 13 augmente artificiellement la densité de stations de base présentes à proximité du terminal 11. En effet, pendant la période de recherche, tout se passe comme s'il y avait une station de base fixe virtuelle à chaque position géographique à laquelle la station de base mobile 13 reçoit un signal radio émis par le terminal 11.

La méthode utilisée pour estimer la position géographique précise du terminal 11 à l'étape 109 peut être la même méthode que celle utilisée à l'étape 102, ou bien une méthode différente. Comme la densité de stations de base présentes à proximité du terminal 11 est artificiellement plus importante pendant la phase 202 que pendant la phase 201, l'estimation 109 de la position géographique du terminal 11 réalisée pendant la phase 202 est plus précise que l'estimation 102 réalisée pendant la phase 201.

Optionnellement, le procédé 100 de géolocalisation peut aussi comporter une étape de configuration 104 à distance du terminal 11 pour que le terminal 11 émette des signaux radio à une fréquence prédéterminée pendant la période de recherche. En effet, dans des systèmes de communication sans fil de type IoT ou M2M, les terminaux sont généralement configurés pour émettre des messages avec une faible fréquence (par exemple seulement quelques messages par jour), notamment pour réduire la consommation énergétique des terminaux. Dans un tel cas, la période de recherche pourrait avoir une durée particulièrement longue, en particulier si l'on souhaite obtenir un grand nombre de mesures pour la station de base mobile 13 à différentes positions dans la zone de recherche 20 afin d'augmenter la précision de géolocalisation. Pour pallier ce problème, il est possible de configurer le terminal 11 pour le forcer à émettre des messages (c'est-à-dire des signaux radio) avec une fréquence plus importante.

La configuration 104 du terminal 11 est par exemple réalisée par l'émission d'un message d'activation d'un mode de recherche à destination du terminal 11 en provenance d'une ou plusieurs stations de base fixes 12 et/ou de la station de base mobile 13. Le message d'activation du mode de recherche comporte par exemple une date de début de la période de recherche, une durée de la période de recherche et une fréquence à laquelle le terminal 11 doit émettre des signaux radio pendant la période de recherche.

Dans des modes particuliers de mise en œuvre, et pour éviter que le terminal 11 reste indéfiniment en écoute d'un message d'activation en provenance d'une station de base 12, 13, une ou plusieurs fenêtres temporelles d'écoute quotidienne est (sont) prédéterminée(s). Par exemple, le terminal passe en mode écoute d'un message d'activation uniquement entre huit heures et neuf heures du matin et entre midi et une heure de l'après-midi.

Dans des modes particuliers de mise en œuvre, le terminal 11 passe en mode de recherche dès la réception du message d'activation.

Dans des modes particuliers de mise en œuvre, lorsque le mode de recherche est activé, le terminal 11 reste en écoute d'un message descendant et le mode de recherche peut être désactivé par la réception d'un message de désactivation du mode de recherche en provenance d'une ou plusieurs stations de base fixes 12 et/ou de la station de base mobile 13.

Dans des modes particuliers de mise en œuvre, un schéma de récurrence avec laquelle le terminal 11 doit émettre des signaux radio pendant la période de recherche est calculé par le terminal 11 en fonction d'un niveau de charge de la batterie du terminal 11. Le schéma de récurrence peut par exemple correspondre à une période de répétition d'un signal radio. Selon un autre exemple, le schéma de récurrence peut indiquer des intervalles temporaires de plus en plus long entre les émissions des signaux radio au fur et à mesure que le niveau de charge de la batterie du terminal 11 diminue.

Dans des modes particuliers de mise en œuvre, le terminal 11 reste en mode de recherche tant que la durée de la période de recherche n'est pas écoulée, ou tant que le terminal 11 n'a pas reçu de message de désactivation du mode de recherche, ou tant que la batterie du terminal 11 n'est pas complètement déchargée.

Il convient de noter que l'ordre des étapes 101 à 109 du procédé 100 de géolocalisation n'est pas nécessairement figé. Par exemple, rien n'empêche que l'étape optionnelle de configuration 104 du terminal 11 ait lieu avant l'une des étapes 101 à 103. Selon un autre exemple, l'ordre des étapes 107 et 108 n'a pas nécessairement d'importance.

Pendant la période de recherche, différentes méthodes peuvent être envisagées pour déplacer la station de base mobile 13 dans la zone de recherche 20.

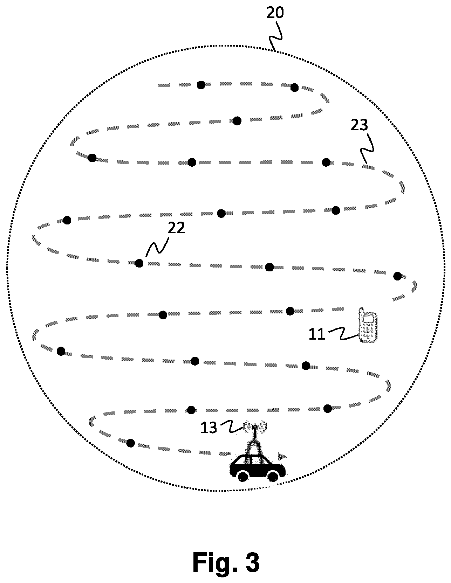

La figure 3 représente schématiquement un exemple de mise en œuvre de l'étape de déplacement 105 de la station de base mobile 13 dans la zone de recherche 20. Dans cet exemple, la station de base mobile 13 se déplace selon un plan de déplacement 23 prédéterminé, indépendamment de la réception des signaux radio émis par le terminal 11 pendant la période de recherche. Le plan de déplacement 23 détermine par exemple une série de directions successives que doit emprunter la station de base mobile 13, ainsi que la vitesse à laquelle la station de base mobile 13 se déplace. Eventuellement, le plan de déplacement peut définir des instants ou des positions géographiques auxquels la station de base mobile 13 peut temporairement s'immobiliser. Tel qu'indiqué précédemment, la station de base mobile 13 peut être embarquée à bord d'un véhicule tel qu'un véhicule automobile ou un drone, mais elle peut aussi être portée par un opérateur humain. Pendant la période de recherche, la station de base mobile 13 reçoit des signaux radio émis par le terminal 11 pendant la période de recherche en différentes positions 22. Dans cet exemple de mise en œuvre de l'étape de déplacement 105, la station de base mobile 13 peut être en déplacement au moment où elle reçoit un signal radio émis par le terminal 11.

Il convient de noter que des méthodes de type FDOA sont particulièrement bien adaptées au mode de mise en œuvre décrit à la figure 3 dans la mesure où il y a un déplacement relatif entre le terminal 11 et la station de base mobile 13.

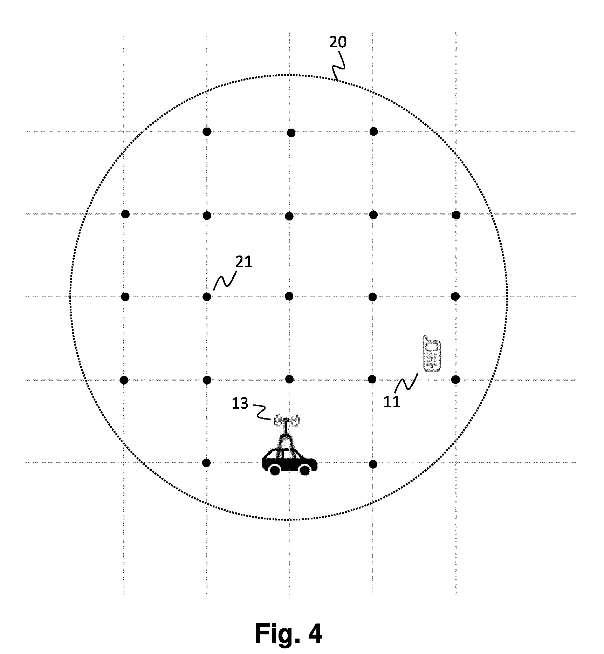

La figure 4 représente schématiquement un autre exemple de mise en œuvre de l'étape de déplacement 105 de la station de base mobile 13 dans la zone de recherche 20. Dans cet exemple, la station de base mobile 13 se déplace successivement en différentes positions prédéterminées 21. La station de base mobile 13 s'immobilise suffisamment longtemps à chacune desdites positions prédéterminées 21 afin de recevoir au moins un signal radio du terminal 11.

Dans des modes particuliers de mise en œuvre du procédé 100 de géolocalisation selon l'invention, la station de base mobile 13 est déplacée dans la zone de recherche 20 (étape 105) selon l'une quelconque des méthodes décrites en référence aux figures 3 et 4. A l'étape 109 d'estimation d'une position géographique précise du terminal 11, une signature virtuelle est déterminée. La signature virtuelle comporte :

- une valeur de paramètre, pour chaque station de base fixe 12, calculée à partir des mesures réalisées par ladite station de base fixe 12 pour les différents signaux radio émis par le terminal 11 pendant la période de recherche, et
- une valeur de paramètre pour chaque mesure réalisée par la station de base mobile 13 pendant la période de recherche.

La position géographique précise du terminal 11 est alors estimée à partir d'une part de la signature virtuelle, et d'autre part des positions géographiques des stations de base fixes 12 et des positions géographiques de la station de base mobile 13 aux différents instants d'émission des signaux radio.

Par exemple, le paramètre considéré est une valeur RSSI mesurée par une station de base fixe 12 ou par la station de base mobile 13 pour un signal radio émis par le terminal 11. La signature virtuelle peut alors correspondre à l'ensemble des valeurs suivantes :

- pour chaque station de base fixe 12, la valeur maximale (ou bien la valeur moyenne, selon un autre exemple) des mesures RSSI mesurées par ladite station de base fixe 12 pour les différents signaux émis par le terminal 11 pendant la période de recherche,
- la valeur RSSI mesurée par la station de base mobile 13 pour chaque signal radio émis par le terminal 11 pendant la période de recherche.

La station de base mobile 13 ayant une position géographique différente à chaque fois qu'elle réalise une mesure RSSI pour un nouveau signal radio émis par le terminal 11 pendant la période de recherche, tout se passe comme si le nombre de stations de base fixes 12 situées à proximité du terminal 11 et utilisées pour estimer la position géographique du terminal 11 était artificiellement augmenté. En effet, s'il y a K stations de base fixe 12 utilisées pour estimer la position géographique du terminal 11, et si on considère que le terminal 11 émet N différents signaux radio pendant la période de recherche, alors la signature virtuelle comporte (N+K) mesures RSSI réalisées pour (N+K) stations de base 12, 13 situées à des positions géographiques différentes. Tout se passe donc comme s'il y avait virtuellement (N+K) stations de base fixes 12 utilisées pour estimer la position géographique du terminal 11 à l'étape 109. Cette augmentation de la densité de stations de base à proximité du terminal 11 pendant la période de recherche conduit à une amélioration de la précision de la géolocalisation du terminal 11.

Dans d'autres modes particuliers de mise en œuvre du procédé 100 de géolocalisation, la station de base mobile 13 est déplacée dans la zone de recherche 20 (étape 105) selon l'une quelconque des méthodes décrites en référence aux figures 3 et 4. Une position géographique intermédiaire du terminal 11 est estimée pour chaque signal radio émis par le terminal 11 pendant la période de recherche, et la position géographique précise du terminal 11 est estimée à partir desdites positions géographiques intermédiaires.

Par exemple, pour un signal radio émis par le terminal 11 pendant la période de recherche, une position géographique intermédiaire est estimée à partir des mesures RSSI réalisées par les stations de base fixes 12 et par la station de base mobile 13. La position géographique précise du terminal 11 est estimée à l'étape 109 comme étant le barycentre des positions géographiques intermédiaires estimées pendant la période de recherche. Considérons par exemple que N signaux radio sont émis par le terminal 11 pendant la période de recherche et notons P(i) la position géographique intermédiaire estimée pour le signal radio d'indice i. La position géographique précise, notée P, du terminal 11 est calculée ainsi :

[Math. 1]

$$P = \frac{1}{N} \sum_{i=1}^{N} P(i)$$

Dans des modes particuliers de mise en œuvre, la position géographique précise du terminal 11 est estimée sous la forme d'une moyenne pondérée des positions géographiques intermédiaires. Chaque position géographique intermédiaire est pondérée en fonction des paramètres mesurés pour les stations de base fixes 12 et la station de base mobile 13 pour les différents signaux radio émis pendant la période de recherche.

Ainsi, dans l'exemple considéré, la position géographique précise, du terminal 11 peut être calculée ainsi :

[Math. 2]

$$P = \frac{1}{\sum_{i=1}^{N} e^{-\frac{\max\,(RSSI(i))}{RSSI_{max}}}} \sum_{i=1}^{N} P(i) \cdot e^{-\frac{\max\,(RSSI(i))}{RSSI_{max}}}$$

où :

- $\max(RSSI(i))$ est la valeur maximale parmi les valeurs RSSI mesurée par les stations de base fixes 12 et par la station de base mobile 13 pour le signal radio d'indice i,
- $RSSI_{max}$ est la valeur maximale parmi toutes les valeurs RSSI mesurée par les stations de base fixes 12 et par la station de base mobile 13 pour les N signaux radio émis par le terminal 11 pendant la période de recherche.

De telles dispositions permettent de donner plus d'importance aux positions intermédiaires pour lesquelles un niveau RSSI maximal élevé est observé.

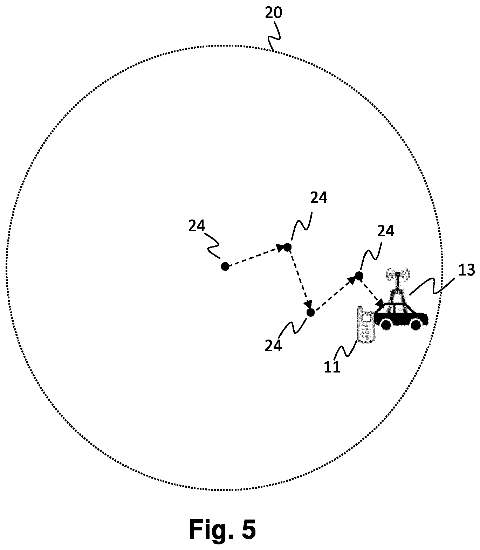

La figure 5 représente schématiquement un autre mode particulier de mise en œuvre du procédé 100 de géolocalisation selon l'invention.

Dans ce mode particulier de mise en œuvre, à l'étape 105 la station de base mobile 13 est successivement déplacée en une position géographique intermédiaire 24 qui correspond à une position géographique estimée par le serveur 24 à partir des mesures réalisées pour un signal radio reçu à une position géographique intermédiaire précédente.

Par exemple la première position géographique intermédiaire correspond à la position géographique grossière estimée pendant la première phase 201 à l'étape d'estimation 102. La station de base mobile 13 reste à cette première position géographique jusqu'à recevoir un signal radio émis par le terminal 11. Une deuxième position géographique intermédiaire est alors estimée par le serveur 14 à partir des mesures réalisées par les stations de base fixes 12 et par la station de base mobile 13 pour ce signal radio. La station de base mobile 13 est alors déplacée jusqu'à la deuxième position géographique intermédiaire. La station de base mobile 13 reste à cette deuxième position géographique intermédiaire jusqu'à recevoir un nouveau signal radio émis par le terminal 11. Une troisième position géographique intermédiaire est alors estimée par le serveur 14 à partir des mesures réalisées par les stations de base fixes 12 et par la station de base mobile 13 pour ce nouveau signal radio. La station de base mobile 13 est alors déplacée jusqu'à la troisième position géographique intermédiaire, et ainsi de suite...

Il convient de noter que chaque position géographique intermédiaire peut être estimée non seulement à partir du signal radio reçu par le terminal 11 positionné à la position géographique intermédiaire précédente, mais aussi à partir de plusieurs signaux radio reçus respectivement à plusieurs positions géographiques intermédiaires précédentes.

La position géographique précise du terminal 11 est alors estimée à l'étape 109 comme étant la dernière position géographique prise par la station de base mobile 13 pendant la période de recherche. La précision de la géolocalisation s'améliore itérativement à chaque déplacement de la station de base mobile 13, au fur et à mesure que la station de base mobile 13 s'approche du terminal 11 recherché.

La méthode utilisée pendant la première phase 201 pour estimer la position géographique grossière du terminal 11 peut être différente de la méthode utilisée pendant la deuxième phase 202 pour estimer la position géographique précise du terminal 11. Par exemple, la méthode utilisée pendant la première phase peut être une méthode de géolocalisation par apprentissage automatique qui associe une signature radio d'un terminal 11 (c'est-à-dire par exemple un ensemble de valeurs RSSI mesurées respectivement par les stations de base fixes 12 pour un signal radio émis par le terminal 11) à une position géographique du terminal 11. La méthode utilisée pendant la deuxième phase peut en revanche être basée sur une méthode de multilatération à partir des mesures RSSI réalisées par les stations de base fixes 12 et par la station de base mobile 13. Il n'est en effet généralement pas possible d'utiliser les mesures réalisées par la station de base mobile 13 avec une méthode d'apprentissage automatique car les signatures radio de référence en base de données n'ont pas d'information relative à la station de base mobile 13.

Pendant la période de recherche, il est également envisageable, pour chaque signal radio émis par le terminal 11, d'estimer d'une part une position $P_1$ du terminal 11 à partir d'une méthode de géolocalisation conventionnelle n'utilisant que des stations de base fixes 12, et d'estimer d'autre part une position $P_2$ du terminal 11 à partir d'une méthode de géolocalisation selon l'invention utilisant en outre la station de base mobile 13. Il est alors envisageable, pour chaque signal radio émis par le terminal 11 pendant la période de recherche, de modéliser l'importance relative d'une méthode par rapport à l'autre et de définir une position P du terminal 11 comme étant une combinaison de la position $P_1$ et de la position $P_2$ :

[Math. 3]

$$P = \frac{1}{Z}\left(P_1 \cdot (1 - w) + P_2 \cdot w\right)$$

où :

- Z est une constante de normalisation,
- w est une fonction modélisant l'importance des deux méthodes d'estimation l'une par rapport à l'autre, par exemple :

[Math. 4]

$$w = e^{-\frac{|RSSI_{max} - \min(RSSI_{max},\ RSSI_i)|}{\sigma}}$$

où :

- $RSSI_{max}$ est la valeur maximale des valeurs RSSI considérées pour une station de base du système 10 (par exemple $RSSI_{max}$ = -90 dBm),
- $RSSI_i$ est la valeur de RSSI mesurée par la station de base mobile 13 pour le signal radio d'indice i,
- $\sigma$ est un paramètre de dimensionnement (par exemple $\sigma$ = 10 dBm).

Il est à noter que $RSSI_{max}$ ne correspond pas nécessairement à la valeur maximale pouvant être mesurée par une station de base, mais il peut prendre n'importe quelle valeur. $RSSI_{max}$ permet de majorer les valeurs de RSSI dans l'équation 4 ci-dessus.

Dans l'exemple considéré, plus un signal radio émis par le terminal 11 pendant la période de recherche est reçu par la station de base mobile 13 avec un niveau RSSI élevé, et plus la position $P_2$ aura un point important par rapport à la position $P_1$.

La position du terminal 11 peut alors être estimée en fonction des différentes positions P estimées respectivement pour les différents signaux radio émis par le terminal 11 pendant la période de recherche.

La description ci-avant illustre clairement que, par ses différentes caractéristiques et leurs avantages, la présente invention atteint les objectifs fixés. Le procédé 100 de géolocalisation selon l'invention permet notamment d'estimer avec précision la position géographique d'un terminal 11 à partir de mesures effectuées par un ensemble de stations de base fixes 12 d'un système de communication sans avoir à augmenter la densité de stations de base fixes. En effet, selon l'invention, la densité est virtuellement accrue par l'utilisation d'une station de base mobile 13 déplacée la zone de recherche 20.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, différentes méthodes peuvent être utilisées pour l'étape de déplacement 105 de la station de base mobile 13 dans la zone de recherche 20 pendant la période de recherche.

Aussi, le fait de choisir un paramètre particulier représentatif d'un signal radio échangé entre le terminal et une station de base pour mettre en œuvre le procédé de géolocalisation selon l'invention ne constitue qu'une variante de l'invention.

Enfin, et comme indiqué précédemment, il existe différentes méthodes pour faire une estimation de la position géographique du terminal 11 à l'étape 102 et/ou à l'étape 109. Le choix d'une méthode particulière ne constitue là aussi qu'une variante de l'invention.

**Revendications**

1. Procédé (100) de géolocalisation d'un terminal (11) d'un système de communication sans fil, ledit système de communication sans fil comportant des stations de base fixes (12), et un serveur (14) de géolocalisation connecté auxdites stations de base fixes (12), la position géographique de chaque station de base fixe (12) étant connue par ledit serveur (14), ledit procédé (100) de géolocalisation comportant :

   - une mesure (101), pour au moins une station de base fixe (12), d'un paramètre représentatif d'un signal radio échangé entre le terminal (11) et ladite station de base fixe (12),
   - une estimation (102) d'une position géographique grossière du terminal (11) à partir de la ou des mesures ainsi obtenues et à partir de la position géographique de chaque station de base fixes (12) pour laquelle une mesure a été obtenue,

- une détermination (103) d'une zone de recherche (20) à partir de la position géographique grossière estimée,
- un déplacement (105) d'une station de base mobile (13) dans ladite zone de recherche (20) pendant une période de recherche prédéterminée, ladite station de base mobile (13) étant connectée au serveur (14) de géolocalisation,
- une émission (106), par le terminal (11), d'au moins un signal radio pendant la période de recherche, chaque signal radio étant émis à destination des stations de base fixes (12) du système de communication sans fil et de la station de base mobile (13),
- une mesure (107), pour chaque signal radio émis par le terminal (11) pendant la période de recherche, d'un paramètre représentatif dudit signal radio pour au moins une station de base fixe (12) et pour la station de base mobile (13),
- une détermination (108), pour chaque signal radio émis par le terminal (11) pendant la période de recherche, d'une position géographique de la station de base mobile (13) à l'instant où est émis ledit signal radio,
- une estimation (109) d'une position géographique précise du terminal (11) à partir d'une part desdites mesures obtenues pendant la période de recherche, et d'autre part de la position géographique de chaque station de base fixe (12) pour laquelle une mesure a été obtenue pendant la période de recherche et de la position géographique de la station de base mobile (13) à l'instant d'émission de chaque signal radio émis par le terminal (11) pendant la période de recherche.

2. Procédé (100) selon la revendication 1 comportant en outre une configuration (104) à distance du terminal (11) pour que le terminal (11) émette des signaux radio avec un schéma de récurrence prédéterminé pendant la période de recherche.

3. Procédé (100) selon l'une des revendications 1 à 2 dans lequel une position géographique intermédiaire du terminal (11) est estimée pour chaque signal radio émis par le terminal (11) pendant la période de recherche, et la position géographique précise du terminal (11) est estimée à partir desdites positions géographiques intermédiaires.

4. Procédé (100) selon la revendication 3 dans lequel la position géographique précise du terminal (11) est estimée sous la forme d'une moyenne pondérée des positions géographiques intermédiaires, chaque position géographique intermédiaire étant pondérée en fonction des paramètres mesurés pendant la période de recherche pour les stations de base fixes (12) et la station de base mobile (13) pour différents signaux radio émis pendant la période de recherche.

5. Procédé (100) selon l'une des revendications 1 à 2 dans lequel une signature virtuelle est déterminée, ladite signature virtuelle comportant :

   - une valeur de paramètre, pour chaque station de base fixe (12) pour laquelle au moins une mesure a été obtenue pendant la période de recherche, calculée à partir de la ou des mesures obtenues pour ladite station de base fixe (12) pour différents signaux radio émis par le terminal (11) pendant la période de recherche, et
   - une valeur de paramètre pour chaque mesure réalisée pour la station de base mobile (13) pendant la période de recherche,

   la position géographique précise du terminal (11) étant estimée à partir d'une part de ladite signature virtuelle, et d'autre part de la position géographique de chaque station de base fixe (12) utilisée pour déterminer la signature virtuelle et des positions géographiques de la station de base mobile (13) aux différents instants d'émission des signaux radio.

6. Procédé (100) selon l'une des revendications 1 à 2 dans lequel une position géographique intermédiaire (24) du terminal (11) est estimée pour chaque signal radio émis par le terminal (11) pendant la période de recherche, la station de base mobile étant déplacée à ladite position géographique intermédiaire (24) avant que le terminal (11) n'émette un nouveau signal radio, la position géographique précise étant estimée comme étant la dernière position géographique prise par la station de base mobile (13) pendant la période de recherche.

7. Procédé (100) selon l'une des revendications 1 à 6 dans lequel ledit paramètre représentatif d'un signal radio échangé entre le terminal (11) et une station de base (12, 13) est un décalage fréquentiel observé pendant la réception dudit signal radio par la station de base (12, 13).

8. Système (10) de géolocalisation d'un terminal (11) d'un système de communication sans fil, ledit système (10) de géolocalisation comportant des stations de base fixes (12) dudit système de communication sans fil dont les positions géographiques sont connues, et un serveur (14) de géolocalisation connecté auxdites stations de base fixes (12), ledit serveur (14) de géolocalisation étant configuré pour :

- collecter, pour au moins une station de base fixe (12), une mesure d'un paramètre représentatif d'un signal radio échangé entre le terminal (11) et ladite station de base fixe (12),
- estimer une position géographique grossière du terminal (11) à partir de la ou des mesures ainsi collectées et à partir de la position géographique de chaque station de base fixe (12) pour laquelle une mesure a été collectée, ledit système (10) de géolocalisation comporte en outre une station de base mobile (13) connectée au serveur (14) de géolocalisation, et le serveur (14) de géolocalisation est configuré pour :

- déterminer, à partir de la position géographique grossière estimée, une zone de recherche (20) dans laquelle la station de base mobile (13) est déplacée pendant une période de recherche prédéterminée,
- collecter, pour chaque signal radio émis par le terminal (11) pendant la période de recherche, une mesure d'un paramètre représentatif dudit signal radio pour au moins une station de base fixe (12) et pour la station de base mobile (13),
- déterminer, pour chaque signal radio émis par le terminal (11) pendant la période de recherche, une position géographique de la station de base mobile (13) à l'instant où est émis ledit signal radio,
- estimer une position géographique précise du terminal (11) à partir d'une part des mesures collectées pendant la période de recherche, et d'autre part de la position géographique de chaque station de base fixe (12) pour laquelle une mesure a été obtenue pendant la période de recherche et de la position géographique de la station de base mobile (13) à l'instant d'émission de chaque signal radio émis par le terminal (11) pendant la période de recherche.

## Patentansprüche

1. Verfahren (100) zur Geolokalisierung eines Endgeräts (11) eines drahtlosen Kommunikationssystems, wobei das drahtlose Kommunikationssystem feste Basisstationen (12) und einen Geolokalisierungsserver (14) beinhaltet, der mit den festen Basisstationen (12) verbunden ist, wobei die geografische Position jeder festen Basisstation (12) dem Server (14) bekannt ist, wobei das Verfahren (100) zur Geolokalisierung beinhaltet:

- eine Messung (101), für mindestens eine feste Basisstation (12), eines Parameters, der für ein zwischen dem Endgerät (11) und der festen Basisstation (12) ausgetauschtes Funksignal repräsentativ ist,
- eine Schätzung (102) einer groben geografischen Position des Endgeräts (11) aus der oder den so erhaltenen Messung(en) und aus der geografischen Position jeder festen Basisstation (12), für die eine Messung erhalten worden ist,
- eine Bestimmung (103) eines Suchbereichs (20) aus der geschätzten groben geografischen Position,
- eine Bewegung (105) einer mobilen Basisstation (13) in dem Suchbereich (20) während eines vorbestimmten Suchzeitraums, wobei die mobile Basisstation (13) mit dem Geolokalisierungsserver (14) verbunden ist,
- ein Senden (106) von mindestens einem Funksignal durch das Endgerät (11) während des Suchzeitraums, wobei jedes Funksignal zu den festen Basisstationen (12) des drahtlosen Kommunikationssystems und der mobilen Basisstation (13) gesendet wird,
- eine Messung (107), für jedes von dem Endgerät (11) während des Suchzeitraums gesendete Funksignal, eines Parameters, der für das Funksignal für mindestens eine feste Basisstation (12) und für die mobile Basisstation (13) repräsentativ ist,
- eine Bestimmung (108), für jedes vom Endgerät (11) während des Suchzeitraums gesendete Funksignal, einer geografischen Position der mobilen Basisstation (13) zum Zeitpunkt, zu dem das Funksignal gesendet wird,
- eine Schätzung (109) einer präzisen geografischen Position des Endgeräts (11) anhand einerseits den während des Suchzeitraums erhaltenen Messungen und andererseits der geografischen Position jeder festen Basisstation (12), für die während des Suchzeitraums eine Messung erhalten worden ist, und der geografischen Position der mobilen Basisstation (13) zum Zeitpunkt des Sendens jedes vom Endgerät (11) während des Suchzeitraums gesendeten Funksignals.

2. Verfahren (100) nach Anspruch 1, das weiter eine Fernkonfiguration (104) des Endgeräts (11) beinhaltet, damit das Endgerät (11) während des Suchzeitraums Funksignale mit einem vorbestimmten Wiederholungsmuster sendet.

3. Verfahren (100) nach einem der Ansprüche 1 bis 2, wobei für jedes von dem Endgerät (11) während des Suchzeitraums gesendete Funksignal eine geografische Zwischenposition des Endgeräts (11) geschätzt wird, und die präzise geografische Position des Endgeräts (11) aus den geografischen Zwischenpositionen geschätzt wird.

4. Verfahren (100) nach Anspruch 3, wobei die präzise geografische Position des Endgeräts (11) in Form eines gewichteten Mittelwerts der geografischen Zwischenpositionen geschätzt wird, wobei jede geografische Zwischenposition in Abhängigkeit von den während des Suchzeitraums gemessenen Parametern für die festen Basisstationen (12) und die mobile Basisstation (13) für verschiedene während des Suchzeitraums gesendete Funksignale gewichtet wird.

5. Verfahren (100) nach einem der Ansprüche 1 bis 2, wobei eine virtuelle Signatur bestimmt wird, wobei die virtuelle Signatur beinhaltet:

- einen Parameterwert, für jede feste Basisstation (12), für die während des Suchzeitraums mindestens eine Messung erhalten worden ist, der aus der oder den für die feste Basisstation (12) erhaltenen Messungen für verschiedene von dem Endgerät (11) während des Suchzeitraums gesendete Funksignale berechnet wird, und
- einen Parameterwert für jede Messung, die für die mobile Basisstation (13) während des Suchzeitraums durchgeführt wird,

wobei die genaue geografische Position des Endgeräts (11) anhand einerseits der virtuellen Signatur und andererseits der geografischen Position jeder festen Basisstation (12) geschätzt wird, die zur Bestimmung der virtuellen Signatur und der geografischen Positionen der mobilen Basisstation (13) zu den verschiedenen Sendezeitpunkten der Funksignale verwendet wird.

6. Verfahren (100) nach einem der Ansprüche 1 bis 2, wobei für jedes von dem Endgerät (11) während des Suchzeitraums gesendete Funksignal eine geografische Zwischenposition (24) des Endgeräts (11) geschätzt wird, wobei die mobile Basisstation zur geografischen Zwischenposition (24) bewegt wird, bevor das Endgerät (11) ein neues Funksignal sendet, wobei die präzise geografische Position als die letzte von der mobilen Basisstation (13) eingenommene geografische Position während des Suchzeitraums geschätzt wird.

7. Verfahren (100) nach einem der Ansprüche 1 bis 6, wobei der Parameter, der für ein zwischen dem Endgerät (11) und einer Basisstation (12, 13) ausgetauschtes Funksignal repräsentativ ist, eine Frequenzverschiebung ist, die während des Empfangs des Funksignals durch die Basisstation (12, 13) beobachtet wird.

8. System (10) zur Geolokalisierung eines Endgeräts (11) eines drahtlosen Kommunikationssystems, wobei das Geolokalisierungssystem (10) feste Basisstationen (12) des drahtlosen Kommunikationssystems beinhaltet, deren geografische Positionen bekannt sind, und einen Geolokalisierungsserver (14), der mit den festen Basisstationen (12) verbunden ist, wobei der Geolokalisierungsserver (14) für Folgendes konfiguriert ist zum:

- Erfassen, für mindestens eine feste Basisstation (12) einer Messung eines Parameters, der für ein zwischen dem Endgerät (11) und der festen Basisstation (12) ausgetauschtes Funksignal repräsentativ ist,
- Schätzen einer groben geografischen Position des Endgeräts (11) aus der oder den so erfassten Messung(en) und aus der geografischen Position jeder festen Basisstation (12), für die eine Messung erfasst worden ist, wobei das Geolokalisierungssystem (10) weiter eine mobile Basisstation (13) beinhaltet, die mit dem Geolokalisierungsserver (14) verbunden ist, und der Geolokalisierungsserver (14) konfiguriert ist zum:

- Bestimmen aus der geschätzten groben geografischen Position, eines Suchbereichs (20), in dem die mobile Basisstation (13) während eines vorbestimmten Suchzeitraums bewegt wird,
- Erfassen, für jedes vom Endgerät (11) während des Suchzeitraums gesendete Funksignal, einer Messung eines repräsentativen Parameters des Funksignals für mindestens eine feste Basisstation (12) und für die mobile Basisstation (13),
- Bestimmen, für jedes von dem Endgerät (11) während des Suchzeitraums gesendete Funksignal, einer geografischen Position der mobilen Basisstation (13) zum Zeitpunkt, zu dem das Funksignal gesendet wird,
- Schätzen einer präzisen geografischen Position des Endgeräts (11) aus einerseits den während des Suchzeitraums erfassten Messungen und andererseits der geografischen Position jeder festen Basisstation (12), für die während des Suchzeitraums eine Messung erhalten worden ist, und der geografischen Position der mobilen Basisstation (13) zum Zeitpunkt des Sendens jedes von dem Endgerät (11) während des Suchzeitraums gesendeten Funksignals.

**Claims**

1. A method (100) for geolocating a terminal (11) of a wireless communication system, said wireless communication system including fixed base stations (12), and a geolocation server (14) connected to said fixed base stations (12), the geographical position of each fixed base station (12) being known by said server (14), said geolocation method (100) including:

   - a measurement (101), for at least one fixed base station (12), of a parameter representative of a radio signal exchanged between the terminal (11) and said fixed base station (12),
   - an estimate (102) of a rough geographical position of the terminal (11) from the measurement(s) thus obtained and from the geographical position of each fixed base station (12) for which a measurement has been obtained,
   - a determination (103) of a search area (20) from the estimated rough geographical position,
   - a displacement (105) of a mobile base station (13) in said search area (20) during a predetermined search period, said mobile base station (13) being connected to the geolocation server (14),
   - an emission (106), by the terminal (11), of at least one radio signal during the search period, each radio signal being emitted to the fixed base stations (12) of the wireless communication system and of the mobile base station (13),
   - a measurement (107), for each radio signal emitted by the terminal (11) during the search period, of a parameter representative of said radio signal for at least one fixed base station (12) and for the mobile base station (13),
   - a determination (108), for each radio signal emitted by the terminal (11) during the search period, of a geographical position of the mobile base station (13) at the time when said radio signal is emitted,
   - an estimate (109) of a precise geographical position of the terminal (11), on the one hand, from said measurements obtained during the search period, and on the other hand, from the geographical position of each fixed base station (12) for which a measurement has been obtained during the search period and from the geographical position of the mobile base station (13) at the time of emission of each radio signal emitted by the terminal (11) during the search period.

2. The method (100) according to claim 1, further including a remote configuration (104) of the terminal (11) so that the terminal (11) emits radio signals with a predetermined recurrence pattern during the search period.

3. The method (100) according to one of claims 1 to 2, wherein an intermediate geographical position of the terminal (11) is estimated for each radio signal emitted by the terminal (11) during the search period, and the precise geographical position of the terminal (11) is estimated from said intermediate geographical positions.

4. The method (100) according to claim 3, wherein the precise geographical position of the terminal (11) is estimated in the form of a weighted average of the intermediate geographical positions, each intermediate geographical position being weighted depending on the parameters measured during the search period for the fixed base stations (12) and the mobile base station (13) for different radio signals emitted during the search period.

5. The method (100) according to one of claims 1 to 2, wherein a virtual signature is determined, said virtual signature including:

   - a parameter value, for each fixed base station (12) for which at least one measurement has been obtained during the search period, calculated from the measurement(s) obtained for said fixed base station (12) for different radio signals emitted by the terminal (11) during the search period, and
   - a parameter value for each measurement made for the mobile base station (13) during the search period,

   the precise geographical position of the terminal (11) being estimated, on the one hand, from said virtual signature, and on the other hand, from the geographical position of each fixed base station (12) used to determine the virtual signature and from the geographical positions of the mobile base station (13) at the different times of emission of the radio signals.

6. The method (100) according to one of claims 1 to 2, wherein an intermediate geographical position (24) of the terminal (11) is estimated for each radio signal emitted by the terminal (11) during the search period, the mobile base station being displaced to said intermediate geographical position (24) before the terminal (11) emits a new radio signal, the precise geographical position being estimated as being the last geographical position taken by the mobile base station (13) during the search period.

7. The method (100) according to one of claims 1 to 6, wherein said parameter representative of a radio signal exchanged between the terminal (11) and a base station (12, 13) is a frequency shift observed during the reception of said radio signal by the base station (12, 13).

8. A system (10) for geolocating a terminal (11) of a wireless communication system, said geolocation system (10) including fixed base stations (12) of said wireless communication system whose geographical positions are known, and a geolocation server (14) connected to said fixed base stations (12), said geolocation server (14) being configured to:

    - collect, for at least one fixed base station (12), a measurement of a parameter representative of a radio signal exchanged between the terminal (11) and said fixed base station (12),
    - estimate a rough geographical position of the terminal (11) from the measurement(s) thus collected and from the geographical position of each fixed base station (12) for which a measurement has been collected, said geolocation system (10) further includes a mobile base station (13) connected to the geolocation server (14), and the geolocation server (14) is configured to:

        - determine, from the estimated rough geographical position, a search area (20) in which the mobile base station (13) is displaced during a predetermined search period,
        - collect, for each radio signal emitted by the terminal (11) during the search period, a measurement of a parameter representative of said radio signal for at least one fixed base station (12) and for the mobile base station (13),
        - determine, for each radio signal emitted by the terminal (11) during the search period, a geographical position of the mobile base station (13) at the time when said radio signal is emitted,
        - estimate a precise geographical position of the terminal (11), on the one hand, from the measurements collected during the search period, and on the other hand, from the geographical position of each fixed base station (12) for which a measurement has been obtained during the search period and from the geographical position of the mobile base station (13) at the time of emission of each radio signal emitted by the terminal (11) during the search period.

**Fig. 1**

**Fig. 2**

**Fig. 3**

**Fig. 4**

**Fig. 5**

# EP 3 977 152 B1

## RÉFÉRENCES CITÉES DANS LA DESCRIPTION

**Documents brevets cités dans la description**

- US 2005075111 A